# EUROPEAN PATENT APPLICATION

(11) **EP 2 365 355 A1**
(43) Date of publication of application: **14.09.2011**
(21) Application number: 11156710.3
(22) Date of filing: 03.03.2011
(51) Int. Cl.: G01S 7/36, G01S 13/78

(54) **Radio receiver**

(30) Priority: 08.03.2010 GB 1003787
(71) Applicant: Cantor International Ltd, Hatfield Broad Oak Nr Bishops Stortford Hertfordshire CM22 7JP (GB)
(72) Inventor: Stevens, Michael, Kingswear, Devon TQ6 0AW (GB); Stevens, Martin, Nr Bishops Stortford, Hertfordshire CM22 7JP (GB)
(74) Representative: Midgley, Jonathan Lee

(57) **Abstract**

A method of receiving signals from an aircraft transponder is provided that enables ADS-B signals to be decoded even though parts of the signal may be overlapped due to interference. A plurality of antennas are summed and subtracted in pairs in order to create directional signal channels, which are then assessed for the confidence of the signals received. Where a channel contains a section of the signal of low confidence, the signal from another channel may be substituted for that section.

## Description

This invention relates to receiving and interpreting signals emitted by transponders, more particularly to the detection of 1090 MHz signals transmitted from aircraft.

Secondary Surveillance Radar (SSR) is a co-operative system that improves the ability of one object to detect the presence of another object, for example the ability of a ground radar station to locate the position of an aircraft. To participate, the object to be detected (the aircraft) carries a transmitter/receiver known as a transponder, which detects transmissions from the ground radar station (typically using a frequency of 1030 MHz and known as an interrogation) and responds with an enhanced signal (typically at 1090 MHz), which is received back at the ground station (known as a reply). Other applications include the location and identification of ships by shore based stations or other ships.

Normally the ground station will measure the range of the aircraft by the elapsed time to obtain the reply and the aircraft's bearing by the direction the ground station antenna is pointing at the time. The reply signal from the aircraft can be coded to provide information such as identification of the aircraft or the altitude at which it is flying, since this latter parameter is difficult to determine from the ground. Position, identification and flight level (altitude) are particularly useful to Air Traffic Control in the safe guidance of aircraft through the sky. Operation in this manner is referred to as mode A (identification) and mode C (flight level). Accordingly, the ground station is able to identify the position of the aircraft based on the detected distance and direction of the aircraft, as well as the flight level obtained using mode C. The aircraft is identified by mode A.

A more recent development of SSR is known as mode S which provides a much increased data capacity on both the ground-to-air link and the air-to-ground link. Each aircraft is given a 24 bit address unique to that aircraft.

A further development of mode S is the ACAS (Airborne Collision Avoidance System) in which aircraft transmit interrogations to other aircraft and receive the subsequent replies. By this means aircraft are able to determine possible collision threats and use the data capacity of mode S to agree complementary avoidance manoeuvres with the threat aircraft. ACAS performance is improved when the aircraft's transponder is caused to transmit "squitters". In the earlier system a squitter was an unintended transmission on 1090 MHz triggered by noise in the receiver although no interrogation on 1030 MHz had been received. In ACAS a squitter is deliberately generated without needing a received interrogation and is basically an "I am here" signal to other aircraft in the locality.

The most recent development of SSR is Automatic Dependent Surveillance - Broadcast (ADS-B), in which an aircraft emits squitters at the rate of about four per second, with each squitter containing data giving the aircraft's position as determined by the aircraft, for example using a Global Navigation Satellite System, as well as its unique address. The advantage of ADS-B is that the system requires only a relatively minor and low cost addition to the existing airborne transponder and replaces the expensive ground radar transmitter (interrogator) with a simpler receive-only installation. This system has particular application for gap filling in large uninhabited regions and for providing services to small airfields.

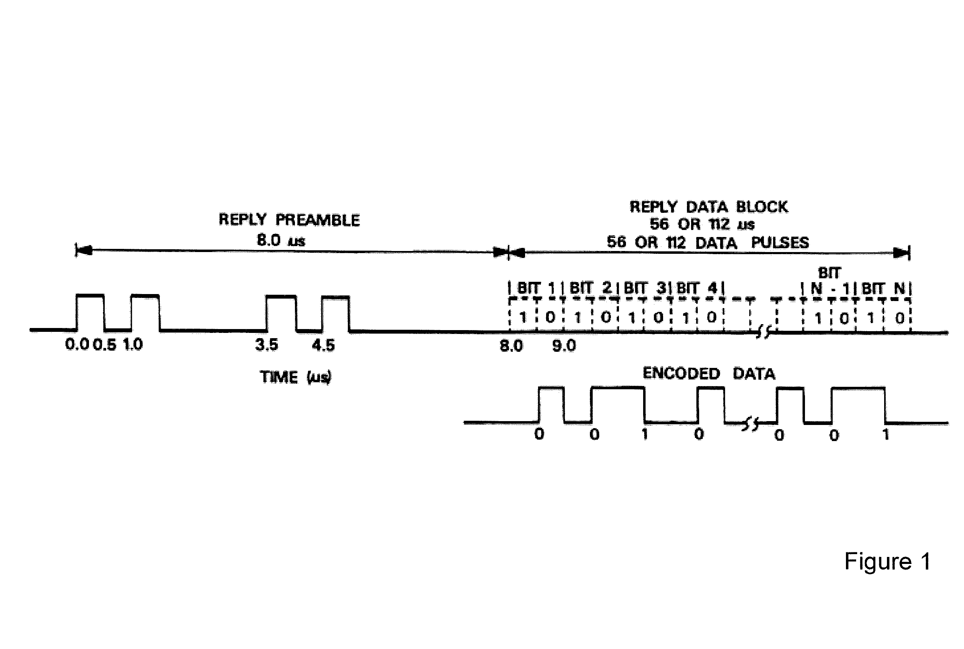

Figure 1 shows a characteristic signal (squitter) transmitted from an aircraft as emitted in ADS-B operation. The signal comprises a plurality of pulses (or non-pulses at a pulse position) that are transmitted with a defined time relationship to each other. Each pulse typically has a leading edge rise time of 50nS and a trailing edge fall time of 100ns as measured between the 10% and 90% amplitude levels, and a 500nS pulse width as measured between the 50% amplitude levels at the leading and trailing edges.

The first four pulses are known as the preamble and are used to synchronise the timing and decoding of the data block that follows. The data consists of either 56 or 112 one-microsecond periods, which are occupied by half microsecond (500nS) pulses (or non-pulses at pulse positions). A pulse in the first half of the period indicates a binary `1' and if in the second half of the period a binary '0'. Detection of either a pulse, or a no-pulse, in the relevant pulse position enables the data to be extracted.

The last 24 pulses comprise a parity check to determine if there is an error in the data as may have been caused by an interfering signal. The parity system used incorporates error correction which enables up to 24 errors to be corrected if no more than 24 of the pulses appear corrupted.

If the signal is overlapped by another signal from another aircraft, or by a delay of its own signal by a reflection, then the amplitude of the pulse and no-pulse positions will be affected. Successful decoding of the data will depend on judgements of the pulse and no-pulse signals and whether the data has been changed and become erroneous.

One algorithm for decoding a signal in the presence of other interfering signals is described in Minimum Operational Performance Standards for 1090MHz Extended Squitter Automatic Dependent Surveillance - Broadcast (ADS-B), RTCA DO-260A, Appendix I, RTCA Inc 2003. A signal sampling rate of 10 samples per microsecond is used. The samples are categorised into one of four amplitude levels determined by analysis of the preamble. Subsequent pulses are compared with the four categories to give a confidence level for each data bit. If there are no more than 24 low confidence bits then these can be checked and corrected if necessary by the parity system employed in the transmitted signal.

A similar problem concerns the detection of the preamble. This is important as it establishes the timing for the subsequent detection and decoding of the data pulses. When two overlapping signals are received, the preamble of the first signal is often clear of interference from the second, possibly later, signal. However the converse is not always true and the preamble pulses of the second signal can be masked by data pulses from the first signal. The second signal may then go unrecognised and not be decoded.

As the other SSR systems described above also use the1090 MHz frequency there is a high probability that an ADS-B signal will suffer from interference. Given the number of aircraft that can be within range of the same receiver, it is common for the signal to experience interference that makes detection difficult. The level of interference may be such that even the provision of error correction cannot enable a receiver to determine the content of the ADS-B signal, meaning that the system becomes unable to determine, for example, the location of an aircraft.

A malevolent person or organisation could transmit false or spoof aircraft ADS-B signals purporting to be from aircraft which do not exist. Such transmissions could be made from a local pirate low power transmitter or from a remote distance such as from another country, or from a ship at sea. The transmissions could be made in such large numbers that an air traffic control system could be paralysed. It is therefore desirable that an ADS-B receiver is adapted to cope with such spoof signals.

According to a first aspect of the invention, there is provided a method for processing a radio signal, comprising: receiving the signal at a plurality of antennas; producing a plurality of intermediate signals, wherein each intermediate signal is one of the set comprising the sum and difference of signals received at one or more pairs of antennas; assessing the amplitude of at least one section of each intermediate signal and attributing a confidence value to each section; and generating an output signal selected from the intermediate signals according to the determined confidence values.

This method provides a simple and useful way of mitigating the effects of interference on radio signals when the interfering signal comes from a different direction to a desired signal. A desired signal is typically a short transmission, such as an ADS-B signal, and the interference affecting it may be another such signal, or random noise. The intermediate signals, as they have been summed and/or differenced between different antennas, will have different proportions of the desired and interfering signals so that one of the intermediate signals may contain the desired signal without significant interference.

Optionally, the confidence values are based on the whole of each intermediate signal. Accordingly, a single signal can be selected as having sufficient amplitude to be decoded.

Alternatively, the method may further comprise: dividing the intermediate signals into a plurality of sections; assigning a confidence value to each section; and combining the sections based on their respective confidence values to provide said output signal. Such a method helps the desired signal to be picked out of interference that may obscure sections of the signal as present in some of the intermediate signals.

Preferably, each section comprises one data bit. This provides great flexibility, as the method can be used to select each data bit of a signal having highest confidence to create a composite signal.

Optionally, the method may further comprise: selecting a first and a second intermediate signal including an interfering signal; determining the amplitude of the interfering signal in the first and second intermediate signals; scaling at least one of the first and second intermediate signals such that the amplitude of the interfering signal in the first intermediate signal is substantially identical to the amplitude of the interfering signal in the second intermediate signal; and subtracting the first intermediate signal from the second intermediate signal. Accordingly, interfering signals can be removed from the intermediate signals in some situations where the intermediate signals do not contain a clear signal without interference.

Preferably, the radio signal is an ADS-B signal sent from an aircraft's transponder.

Typically, the method will further comprise the step of decoding the output signal.

According to a second aspect of the invention there is provided a processing system for processing radio signals from a plurality of antennas; comprising: a sum and differencing unit arranged to produce a plurality of intermediate signals, wherein each intermediate signal is one of the set comprising the sum and difference of signals received at one or more pair of antennas; an assessor arranged to assess the amplitude of each intermediate signal and attribute a confidence value to at least one section of each intermediate signal; and a selector arranged to select an intermediate signal according to the attributed confidence values.

Such a processing system can mitigate the effects of interference on radio signals when the interference comes from a different direction to the desired signal by substantially reducing the amplitude of the interference in one of the intermediate signals.

Optionally, the assessor is adapted to attribute a confidence value to the whole signal. This enables the processing system to choose one intermediate signal over the other in its entirety.

Alternatively, the assessor is adapted to assign confidence values to a plurality of sections of each intermediate signal, the processing system further comprising: a combiner arranged to combine the sections based on each section's confidence value, to produce the output signal. This enables the processing system to combine sections of intermediate signals with high confidence to create an output signal with high overall confidence, when the intermediate signals may contain low confidence sections with high interference.

Preferably, each section is a data bit. Accordingly, the processing system can choose on a bit by bit basis which intermediate signal has the highest confidence signal.

Preferably, the system is adapted to receive ADS-B signals sent from an aircraft's transponder.

According to a third aspect of the invention, there is provided a receiving system for receiving first and second received radio signals at first and second antennas respectively; comprising: first and second mixers arranged to mix an oscillator signal with said first and second received radio signals to produce first and second intermediate frequency signals; and a sum and differencing unit coupled to the first and second mixers arranged to add and subtract the first and second intermediate frequency signals to produce sum and difference signals.

Such a receiving system has a number of advantages over systems that have a sum and differencing unit adapted to work at the Radio Frequency (RF) rather than Intermediate Frequency (IF). In particular, where a sum and differencing unit might be a large hybrid ring at radio frequency, it may take the form of a small transformer at Intermediate Frequency. Any other components used to manipulate the signal at IF are also typically smaller than RF equivalents, lowering the cost and increasing the ease of integrating the components on a printed circuit board. Furthermore, by summing and differencing at IF the signal to noise ratio is markedly improved compared to performed at RF. The receiving system may work constantly, such that the sum and difference signals represent the instantaneous sum and difference of signals received at the two antennas.

Preferably, the receiving system is further adapted to receive a third received signal from a third antenna, the system further comprising: a third mixer for mixing said oscillator signal with said third received radio signal to produce a third intermediate frequency signal; and wherein said sum and differencing unit is further coupled to the third mixer for determining the sum and difference of pairs of each of the first, second and third intermediate frequency signals. Such a receiving system can normally produce up to six sum and difference signals by summing and differencing each pair of antennas.

Preferably, the mixers use a common oscillator signal produced by a local oscillator. This advantageously preserves the phase relationship between the IF channels.

According to a fourth aspect of the invention, there is provided a method for processing overlapping first and second radio signals; comprising: receiving the radio signals at a plurality of antennas; producing a plurality of intermediate signals, wherein each intermediate signal is one of the set comprising the sum and difference of signals received at one or more pair of antennas; selecting two intermediate signals comprising the first and second radio signals; determining the amplitude of the second radio signal in each selected intermediate signal, where it does not overlap the first radio signal; scaling at least one of the selected intermediate signals such that the second radio signal has a substantially identical amplitude in each intermediate signal; and subtracting one intermediate signal from the other to produce a processed signal.

This method allows overlapping signals, such as short ADS-B transmissions, to be distinguished from each other.

Preferably, the method further comprises: determining the amplitude of the first radio signal in each selected intermediate signal where it does not overlap the second radio signal; rescaling at least one of the selected intermediate signals such that the first radio signal has a substantially identical amplitude in each intermediate signal; and subtracting one intermediate signal from the other to produce a second processed signal.

A specific embodiment of the present invention will now be described, by way of example, with reference to the drawings in which:
Figure 1 is a schematic view of an ADS-B signal or squitter;
Figure 2 is a schematic circuit diagram of a receiver having two antennas;
Figure 3 is graph showing the strength of a given signal in the sum and difference channels depending on its angle of arrival;
Figure 4 is a schematic circuit diagram of a receiver having three antennas;
Figure 5 is graph showing the variation in signal strength with angle of arrival resulting from the sum and difference outputs from three receiver channels; and
Figures 6a, 6b and 6c are illustrations of possible antenna configurations.

The embodiment described below relates to a system and method for receiving and decoding ADS-B signals from aircraft. However, the principles described may be adapted for use in other radio systems, including the detection of SSR reply signals and the like.

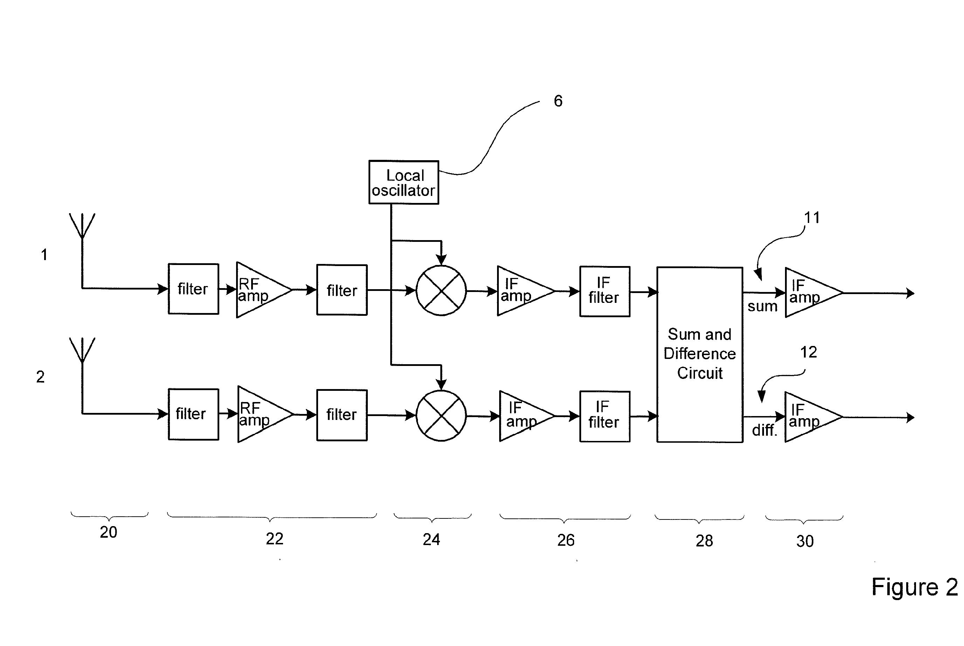

By way of example figure 2 shows one implementation of a ground receiving system. There are two antennas 1, 2 that have their own signal channels. Each signal channel comprises a receiving section 20 wherein the antennas are coupled to the channels. Each signal channel further comprises an RF (Radio Frequency) stage 22 and a mixer 24, which outputs at IF (Intermediate Frequency) in a standard superheterodyne arrangement. There is an IF stage 26, which feeds into a sum/differencing circuit 28 which produces two outputs 11, 12 equal to the sum 11 of the two IF signals and to the difference 12 between those two signals respectively. These two outputs are further amplified by amplifying section 30 before being output to a detector for detecting the data within the signals.

Mixer stage 24 converts the RF signals received at the antennas 1, 2 to IF signals for further processing by IF stage 26 and the sum/differencing circuit 28. The mixer on each signal channel is driven by a common Local Oscillator 6. Accordingly, the phase relationship between each signal channel is maintained.

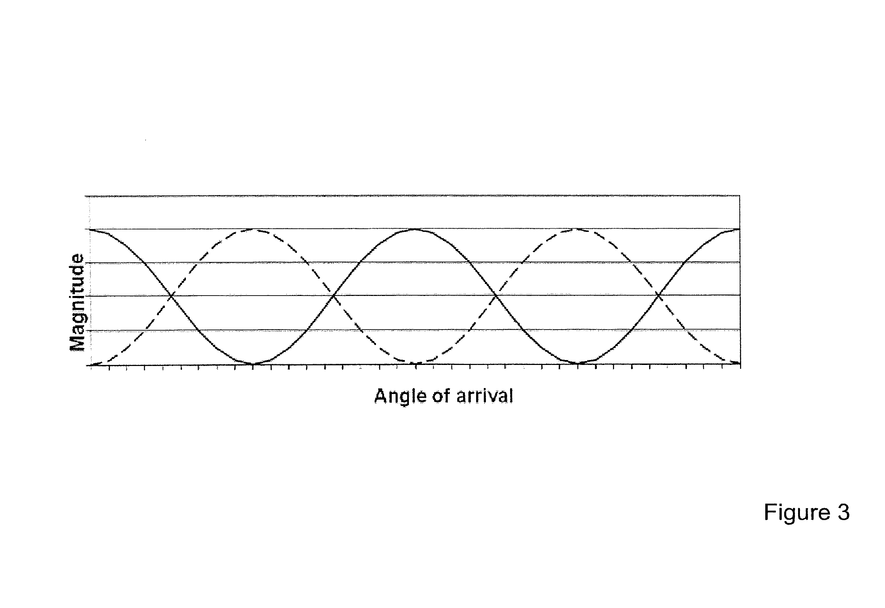

Depending upon the separation between the two antennas and the direction of arrival of the signal from the aircraft, the output from the two IF channels will vary as shown in figure 3. Each line shows the strength of the signal in the sum and difference channel (11 and 12) respectively, for different angles of arrival.

The effect of the arrangement is that a given signal can vary from a maximum (when the signals via the two channels add) to a minimum (when the two signals subtract) depending upon the angle of arrival at the two antennas. If a wanted signal and an interfering signal were to arrive simultaneously but from different angles of arrival the amount of interference to the wanted signal will vary between the two outputs. In a particularly favourable situation the interfering signal will have been reduced to zero in one of the channels enabling the wanted signal to be detected without error. Such a favourable situation does not normally apply but the two outputs will give different ratios between wanted and interfering signals, which can be used to assist the determination of the wanted signal, and its contained data, by selection of the appropriate output.

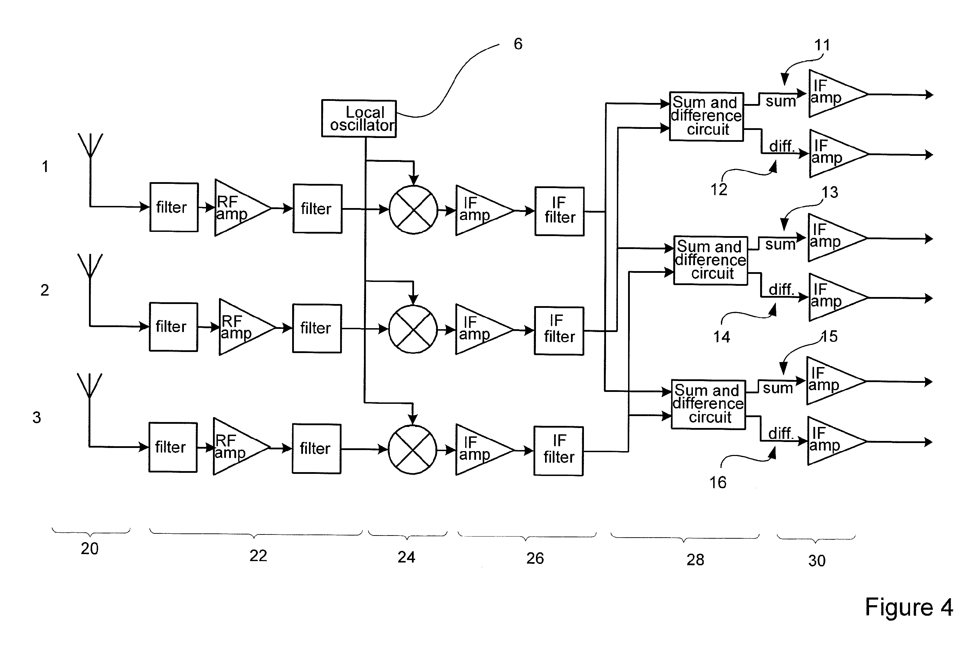

With reference to Figure 4, an alternative arrangement is illustrated having three antennas 1, 2 and 3. As with the system illustrated in Figure 2, each antenna has its own signal channel comprising receiving section 20; RF stage 22; mixer 24 and IF stage 26. The three outputs connect to three sum/differencing circuits 28 to provide six separate outputs 11 to 16, which are amplified by amplifier section 30 before being output for detection. Each of these six signals will contain differing ratios of wanted signal to interfering signal which enhances the ability to detect the correct data bit values with high probability.

Two implementations of a receiver have been described above, adapted for taking in signals from two and three antennas. The receivers comprise various amplifiers and filters in order to aid the processing and reading of a received signal. The skilled man will appreciate that these amplifiers and filters are not essential, and that other implementations may omit some or all of these stages. Similarly, the components may be rearranged as necessary or desired, for example first converting the signal to IF before carrying our any filtering or amplification. Furthermore, the skilled man will realise that it is possible to process a signal without first converting it to IF, although this is not preferred.

The receivers described use a sum and difference circuit to create output channels being equal to the sum of the inputs and the difference between them. The sum and difference circuit could potentially be positioned anywhere along the signal channel. For example, the sum and difference circuit could be located before the mixer circuit 24 and therefore operate at RF. In such a case the sum and difference circuit could be implemented using a hybrid ring or the like. However, it is preferred that the sum and difference circuit is located after conversion to IF, in which case the circuit may be implemented using a transformer; an integrated circuit or the like. Other potential implementations may use four or even more antennas and have a correspondingly increased number of input, signal and output channels in order to allow the sum and difference of each channel with each other to be monitored. After the signals received by the antennas have been split into a plurality of outputs by the receiving system, the outputs are then passed to a detector for determining the content of the signals. Once the content of the signal is determined, it can be passed on for further processing or use, for example being sent to an Air Traffic Control System. The signals are passed to an analogue to digital converter (ADC), and the detector then processes the digital signal to detect the receipt of an ADS-B signal and determine its content. In one implementation, the detector may have a rest state in which incoming signals are monitored but not recorded or further processed until a preamble signal is detected. The detector may then begin recording or processing all channels in order to determine the content of the ADS-B signal.

As described above, methods known in the art may be used to categorise the signal or portions thereof received at each channel into confidence levels, based for example on the amplitude of the signal or a pulse thereof compared to the preamble. Alternatively, measures such as the sum/difference signal ratio or the direction of arrival may be used. These confidence levels are used to indicate the reliability of each data bit contained in the signal.

Alternatively, confidence may be assessed using a different level of granularity. For example, rather than assigning a confidence value to a single data bit, each pulse or pulse position within the bit could be assigned a confidence value. Alternatively, the confidence values may be assigned to groups of data bits to minimise processing overheads when the level of interference is low. In general, the signal may be divided into a plurality of sections, each section representing a time slice of the signal as a whole. Such division may be into equal or unequal sections, and may be based on the strength of the signal in each section or other such measures. The duration of the section may be determined as a arbitrary period of time, or potentially be defined as containing an integer number of pulse positions or data bits.

It is preferable to detect the preamble of each signal in order to establish the timing for extracting the data in the following data block, figure 1. Whether the receiver outputs two, six or more channels to the detector, it is possible that not all channels will contain the preamble free of significant interference such as to prevent further processing of data in that channel. In order to overcome this problem, each of the output data channels 11 to 16 has a preamble detector generating separate timing references. These references are shared with the other channels enabling data block decoding to take place in the other channels even though a preamble may not have been detected in those other channels due to interference from overlapping signals.

As described above, it is possible that some channels may not receive the preamble due to interference. Nevertheless, it is possible that a channel that does not receive a clear preamble, for example due to the tail end of another ADS signal overlapping it, may still receive a clear body or data block of the ADS-B signal. Furthermore, interference may make a section of the data block unreadable on one channel, whilst another channel has a clear version of that data block, for example due to the interference being from a direction that is reduced by the sum or difference circuit. Accordingly, it is possible for the detector to combine the input channels it receives into a composite channel, comprising the sections of different channels in which the signal is strongest or most reliable. This may be done with reference to the confidence levels mentioned earlier on, such that only those signals with the highest confidence levels are used. This may be done on a data bit by data bit basis, or alternatively on the basis on any other section of the signal as described above.

Figure 3 shows the variation in receiver sensitivity with angle of arrival in the sum and difference channels formed from two antenna and receiver channels. It can be seen that in some directions the signal is strong in one channel and at the same time weak in the other channel and vice versa.

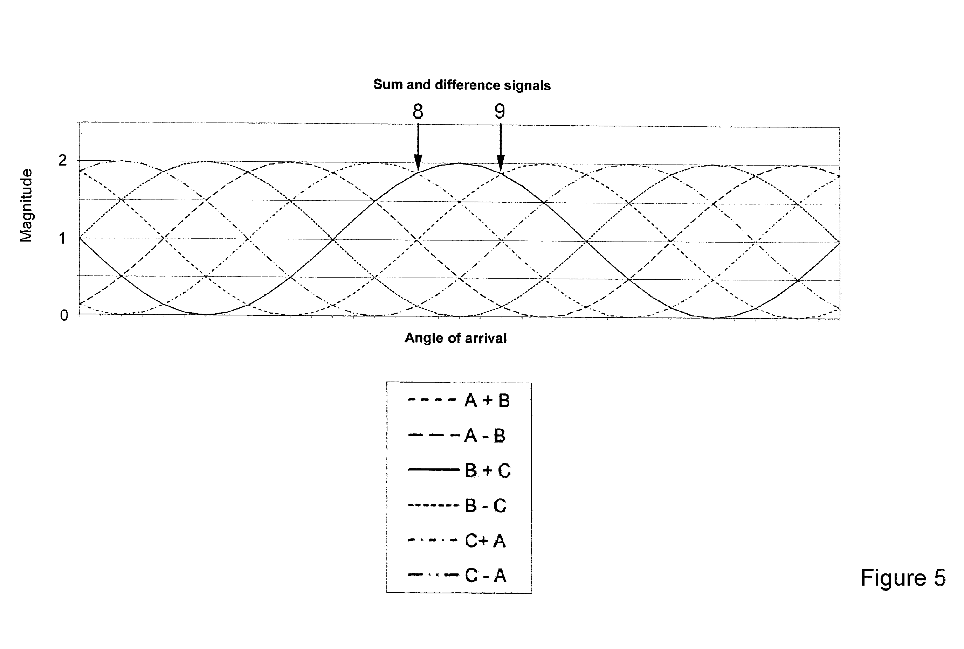

Figure 5 shows the six sum and difference channels resulting from three antennas 1, 2 and 3, labelled here as A, B and C. Consider two overlapping signals of equal strength arriving from directions 8 and 9. In a typical implementation a single omni-directional antenna is used and these signals would have been detected with equal amplitude and their mutual interference would have made their decoding difficult if not impossible.

In Figure 5 the signals are received in the B + C channel (solid line in the diagram) and are also of equal amplitude. However in channel A - B, (long dashes in the diagram) a first signal arriving from direction 8 is reduced in amplitude from 1.7 to 1.0 while a second signal arriving from direction 9 is reduced from 1.7 to 0.13. Consequently the first signal is now 7.7 times stronger than the second signal and can easily be decoded. The converse is true in channel B ― C (close dots in the diagram) where the second signal is 7.7 times greater than the first signal. Use of multiple antennas and multiple receiver channels significantly improves the ability to decode signals subject to interference, as described above with relation to Figures 2 and 4 and the receiving systems described.

Simultaneous with the above process another technique can be used. Any pair of channels provides a different mix of two overlapping signals provided that they are not arriving from an identical direction. By way of example consider the channels B + C and B - C in Figure 5. Assuming that the signals are only partially overlapping then there will be some pulses, either at the beginning or at the end, which are clear from interference. If the ratio of a clear pulse as seen in channel B - C and the same pulse in channel B + C is measured, the signal in B - C scaled to equal the amplitude of the signal in B + C and then subtracted from it, the result is that, in the resulting output, one of the signals is reduced to substantially zero. This process may be continued throughout the duration of the signal using the original ratio determined from the clear pulse. Accordingly, by subtracting a scaled version of a signal in one of the sum/difference channels from another, that signal can be reduced in amplitude so that another signal received at a similar time can be clearly interpreted.

It is possible that the preamble may be detected at slightly different times on different channels, leading to different timing references being generated. In such a case, it is possible that each channel with a clear preamble may be decoded using the timing reference of that channel. In a further adaptation, the timing references of other channels may be used in order to determine which timing reference results in a signal of the highest clarity and confidence that may be determined from the channel.

The skilled man will realise that each channel may have a separate detector, or that a multi-channel detector may be provided for interpreting the signals received through several channels. Such a multi-channel detector may comprise discrete channels for each input, or alternatively use multiplexing techniques to avoid the need for such channels. The detector may incorporate features of the receiving system, such as the sum and difference circuit and amplifying stages, such that it is adapted to simply receive input from the antennas. The ADC may be incorporated into the detector, or alternatively be a separate component.

The skilled man will further realise that, whilst it is preferable to carry out digital processing of the received signals, the processing could be potentially carried out in an analogue environment, meaning that a detector could be operated without an ADC. In the case where the signal is processed digitally, the methods described may be carried out by discrete components, or alternatively programmable integrated circuits or Field Programmable Gate Arrays or the like. In one implementation, the system may be implemented entirely in software to be run on a computer, and encoded in a computer readable medium such as an optical or magnetic disk; a solid state storage device such as a memory card; or as a signal sent over the internet or through a wireless provider. The skilled man will further realise that it may be possible to implement the systems described, including the initial receiving systems, entirely digitally, carrying out digital addition and subtraction of the signals.

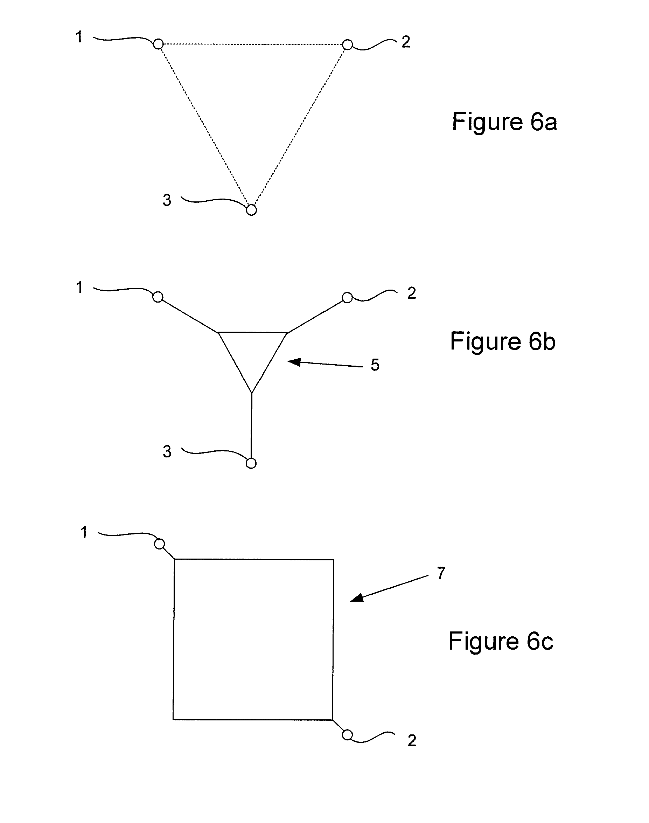

It is a usual requirement to provide 360° coverage to detect aircraft in all directions. One way of achieving this is to place the receiving antennas on the top of a tower or existing building. Figure 6a shows a desirable arrangement of three antennas 1 to 3 when free deployment is possible. Unfortunately other important systems can also require 360° coverage so these desirable locations may not be available.

Figure 6b shows three antennas placed around a narrow tower 5 used to support another facility, for example a VHF radio mast. The particular benefit of this arrangement is that the ADS-B equipment can share an existing installation, not only reducing the cost but also offering the ability to share a good reception site already occupied by other equipment.

Figure 6c shows the antennas placed on two opposing corners of a building 7 when roof mounting is not possible. Clearly each antenna cannot provide 360° coverage. This invention provides a means of combining signals from antennas placed on the sides of buildings while still minimising the effects of interference.

In general, the antennas need not be positioned in a precise orientation compared to each other, i.e. they need not form a regular shape or arrangement. However, if the relationship between their locations and orientations are known, then it may be possible to assign directions to the outputs of the sum/difference circuits. The system described above is robust to misalignments of the antennas, and may even operate in a situation with moving antennas. In such a situation it is preferable that the movement of the antennas is slow with respect to the signals received.

In a further implementation, the ratio of sum signal strength to difference signal strength is measured to provide an estimate of the angle of arrival of the signal at the pair of antennas. This estimate may be used to discriminate between other signals which may be arriving from different directions.

A malevolent person may transmit false ADS-B signals in large numbers to attempt to disrupt the air traffic control system. An attribute of some types of spoof ADS-B report is that they come from a fixed position and from a fixed direction (which may further be distinct from where the spoof aircraft says it is). In order to mitigate the problem, a time limited log of directions, as indicated by the ratio of the signal strengths of sum and difference signals derived from the receiver channels, of all received signals is maintained. Spoofing may become evident by a large number of signals being received with a common sum/difference ratio, and potentially a similar signal strength. Should this occur a message may be transmitted to the end user of a possible threat. The log is preferably time limited so that data does not accumulate endlessly. The period of the time limit is variable but a limit of 10 minutes is the nominal period.

Each aircraft detected and successfully decoded results in a target report sent to the end user. In the case that the sum/difference channels have directions associated with them, there is an option to include a measured direction for each aircraft so that the end user can compare it with the position claimed in the aircraft's signal so that the user can perform a validity check. Alternatively, such a check may be automated.

The skilled man will realise that the different examples described above may be used in combination with each other, for example the various different antennas arrangements may be used with the different receiving systems described.

## Claims

1. A method for processing a radio signal, comprising:
receiving the signal at a plurality of antennas;
producing a plurality of intermediate signals, wherein each intermediate signal is one of the set comprising the sum and difference of signals received at one or more pairs of antennas;
assessing the amplitude of at least one section of each intermediate signal and attributing a confidence value to each section; and
generating an output signal selected from the intermediate signals according to the determined confidence values.

2. A method according to claim 1, wherein the confidence values are based on the whole of each intermediate signal.

3. A method according to claim 1, further comprising:
dividing the intermediate signals into a plurality of sections;
assigning a confidence value to each section; and
combining the sections based on their respective confidence values to provide said output signal.

4. A method according to claim 3, wherein each section comprises one data bit.

5. A method according to any preceding claim, further comprising:
selecting a first and a second intermediate signal including an interfering signal;
determining the amplitude of the interfering signal in the first and second intermediate signals;
scaling at least one of the first and second intermediate signals such that the amplitude of the interfering signal in the first intermediate signal is substantially identical to the amplitude of the interfering signal in the second intermediate signal; and
subtracting the first intermediate signal from the second intermediate signal.

6. A method according to any preceding claim, further comprising the step of decoding the output signal.

7. A processing system for processing radio signals from a plurality of antennas; comprising:
a sum and differencing unit arranged to produce a plurality of intermediate signals, wherein each intermediate signal is one of the set comprising the sum and difference of signals received at one or more pair of antennas;
an assessor arranged to assess the amplitude of each intermediate signal and attribute a confidence value to at least one section of each intermediate signal; and
a selector arranged to select an intermediate signal according to the attributed confidence values.

8. A processing system according to claim 7, wherein the assessor is adapted to attribute a confidence value to the whole signal.

9. A processing system according to claim 7, wherein:
the assessor is adapted to assign confidence values to a plurality of sections of each intermediate signal, the processing system further comprising:
a combiner arranged to combine the sections based on each section's confidence value, to produce the output signal.

10. A processing system according to claim 9, wherein each section is a data bit.

11. A receiving system for receiving first and second received radio signals at first and second antennas respectively; comprising:
first and second mixers arranged to mix an oscillator signal with said first and second received radio signals to produce first and second intermediate frequency signals; and
a sum and differencing unit coupled to the first and second mixers arranged to add and subtract the first and second intermediate frequency signals to produce sum and difference signals.

12. A receiving system according to claim 11, wherein the receiving system is further adapted to receive a third received signal from a third antenna, the system further comprising:
a third mixer for mixing said oscillator signal with said third received radio signal to produce a third intermediate frequency signal; and wherein
said sum and differencing unit is further coupled to the third mixer for determining the sum and difference of pairs of each of the first, second and third intermediate frequency signals.

13. A receiving system according to claims 11 or 12, wherein the mixers use a common oscillator signal produced by a local oscillator.

14. A method for processing overlapping first and second radio signals; comprising:
receiving the radio signals at a plurality of antennas;
producing a plurality of intermediate signals, wherein each intermediate signal is one of the set comprising the sum and difference of signals received at one or more pair of antennas;
selecting two intermediate signals comprising the first and second radio signals;
determining the amplitude of the second radio signal in each selected intermediate signal, where it does not overlap the first radio signal;
scaling at least one of the selected intermediate signals such that the second radio signal has a substantially identical amplitude in each intermediate signal; and
subtracting one intermediate signal from the other to produce a processed signal.

15. A method according to claim 14, further comprising:
determining the amplitude of the first radio signal in each selected intermediate signal where it does not overlap the second radio signal;
rescaling at least one of the selected intermediate signals such that the first radio signal has a substantially identical amplitude in each intermediate signal; and
subtracting one intermediate signal from the other to produce a second processed signal.
